(19) Europäisches Patentamt
European Patent Office
Office européen des brevets

(11) Veröffentlichungsnummer: **0 440 080 A2**

(12) # EUROPÄISCHE PATENTANMELDUNG

(21) Anmeldenummer: **91100801.9**

(51) Int. Cl.5: **G06F 11/00**, G11C 19/00

(22) Anmeldetag: **23.01.91**

(30) Priorität: **01.02.90 DE 4002918**

(43) Veröffentlichungstag der Anmeldung:
**07.08.91 Patentblatt 91/32**

(84) Benannte Vertragsstaaten:
**AT BE CH DE ES FR GB GR IT LI LU NL SE**

(71) Anmelder: **Daimler-Benz Aktiengesellschaft**
**Postfach 80 02 30**
**W-7000 Stuttgart 80(DE)**

(72) Erfinder: **Mohrdieck, Christian, Dr. rer. nat.**
**Eifelstrasse 17**
**W-6000 Frankfurt/Main 71(DE)**

(74) Vertreter: **Lertes, Kurt, Dr.**
**AEG Aktiengesellschaft Theodor-Stern-Kai 1**
**W-6000 Frankfurt/Main 70(DE)**

(54) **Fehlertolerantes Schieberegister auf der Basis neuronaler Netze.**

(57) Die Erfindung betrifft ein fehlertolerantes Schieberegister mit einer bestimmten Anzahl von Ausgängen.

Sie besteht darin, dass eine von der Anzahl n der Ausgänge abhängige Zahl von elektrischen bzw. elektronischen Bauelementen, die sigmoide Eingangs/Ausgangskennlinien aufweisen, in Zeilen und Spalten nach Art eines Gitters angeordnet sind. Dieses weist in Längsrichtung eine vorgebbare Zahl von Bauelementen und in Breitenrichtung eine vorgebbare Zahl von Bauelementen, also n aus jeweils p Spalten bestehenden Streifen zu je p r Stück Bauelementen auf. Zwischen den Bauelementen in einem Streifen sind synaptische Koppelungen vorgesehen.

EP 0 440 080 A2

Xerox Copy Centre

# FEHLERTOLERANTES SCHIEBEREGISTER AUF DER BASIS NEURONALER NETZE

Die Erfindung bezieht sich auf ein fehlertolerantes Schieberegister mit einer bestimmten Zahl von Ausgängen.

Zahlreiche elektronische Schaltungen und Bauelemente sind auf einwandfrei funktionierende Schieberegister angewiesen. Gerade bei hochintegrierten (grossflächigen) Schaltungen kommt es bereits im Herstellungsprozess oder durch spätere Zerstörung zu Defekten, wie etwa zum Ausfall von Bauelementen oder Kurzschlüssen. Um die Ausbeute an brauchbaren Schaltungen trotzdem ausreichend gross zu halten, werden die Schieberegister (oder andere Schaltfunktionen) mehrfach redundant ausgelegt. Beim Ausfall eines Schieberegisters kann man dann auf ein anderes zurückgreifen. Die Wahrscheinlichkeit für das gleichzeitige Auftreten von Fehlern in mehreren der redundant ausgelegten Schaltfunktionen ist nämlich bei den heute erreichbaren Defektdichten sehr klein.

Die Schaltungen werden zwar mehrfach redundant angelegt, auftretende Fehler müssen allerdings zunächst lokalisiert und dann durch geeignete Massnahmen (wie zum Beispiel durch Durchtrennen von Leiterbahnen mit Hilfe eines Lasers) behoben werden. Ein derartiges Verfahren ist zeitaufwendig und kostenintensiv, selbst wenn die Zahl der Defekte sehr klein ist.

Der Erfindung liegt die Aufgabe zugrunde, ein fehlertolerantes Schieberegister zu entwickeln, das auch dann noch einwandfrei arbeitet, wenn zwischen den elektrischen oder elektronischen Bauelementen Verbindungen unterbrochen sind beziehungsweise die Bauelemente ausgefallen sind.

Die Aufgabe wird erfindungsgemäss durch die Merkmale im Kennzeichen des Anspruchs 1 gelöst. Bei der im Anspruch 1 beschriebenen Anordnung wird ein Schieberegister durch eine nach Art eines neuronalen Netzes aufgebaute Schaltung aufgebaut. Die verschiedenen Zustände, die ein Schieberegister mit einer vorgegebenen Zahl von Ausgängen annehmen kann, werden einem neuronalen Netz als Mustersequenzen eingegeben.

Damit ist es möglich, ein Schieberegister zu konstruieren, dessen Funktionsweise aufgrund von Fehlertoleranz im neuronalen Netz auch bei Ausfall von Teilen des Systems durch Herstellungsfehler oder Zerstörung noch gesichert bleibt, ohne dass eine Fehlersuche und die nachfolgende Ausbesserung notwendig sind.

Neuronale Netze sind aufgrund ihrer nachstehend angegebenen Eigenschaften zur Mustererkennung geeignet. Es handelt sich bei den neuronalen Netzen und Speicher, die

a) inhaltsadressierbar, assoziativ,
b) rauschunempfindlich,
c) verteilt, robust,
d) schnell,
und
e) sehr leicht an neue Aufgaben anpassbar

sind. Die erste Eigenschaft ist im Gegensatz zur Funktionsweise herkömmlicher Computer zu sehen. Dort werden Informationen nach "Marken" (Labels) klassifiziert. Neuronale Systeme speichern nach dem Inhalt der Informationen. Ähnlich wie bei einem Hologramm ist die Information über das ganze System verteilt und nicht lokalisiert. Daher rührt eine grosse Robustheit der Funktionsweise des Gesamtsystems gegenüber Fehlern beziehungsweise Zerstörungen in einzelnen Teilen des Systems.

Aufgrund hochgradig paralleler Signalverarbeitung zeichnen sich neuronale Netze durch extreme Schnelligkeit aus.

In einer Lernphase lassen die Modelle sich jeweils an neue Aufgaben anpasen. In einem Überblicksartikel von E. DOMANY (J. Stat. Phys. 51, 743 (1988)) wird der Stand der physikalischen Forschung zu dem Thema erläutert. Mit Hilfe von Methoden aus der Festkörperphysik konnten viele exakte Aussagen über den Mustererkennungsprozess in neuronalen Netzen gemacht werden, die auf ein Modell HOPFIELDS (Proc. Natl. Acad. Sci. U.S.A. 79, 2554 (1982)) zurückgehen. Insbesondere ist es möglich, einen Algorithmus zur fehlerfreien Wiedererkennung zuvor gelernter Muster anzugeben (L. PERSONNAZ, I. GUYON und G. DREYFUSS, J. Phys. Lett. 46, 359 (1985) und I. KANTER und H. SOMPOLINSKI, Phys. Rev. A. 35, 380 (1987).

Die Wiedererkennung, die in Form einer Rekonstruktion des zu erkennenden Musters geschieht, wird bei der oben beschriebenen Anordnung als Erzeugung des Musters angesehen. Ein Modell für ein neuronales Netz, das in der Lage ist, Sequenzen zu erzeugen, wird auf die oben beschriebene Weise als "neuronales" Schieberegister verwendet. Die oben unter a) bis e) angegebenen Eigenschaften sind bei diesen Schieberegister vorhanden.

Vorzugsweise sind die Bauelemente Operationsverstärker. Diese weisen eine sigmoide Kennlinie auf.

Die Absolutwerte der im Anspruch 1 angegebenen synaptischen Stärken sind vorzugsweise als elektrische Leitwerte ausgebildet, wobei negative Absolutwerte durch Signalinvertierung realisiert werden. Hierzu kann zweckmässigerweise der "inverse" Ausgang des zugehörigen Operationsverstärkers verwendet werden.

Bei einer zweckmässigen Ausführungsform sind Operationsverstärker in mindestens vier Zeilen vorgesehen. Ein derartig aufgebautes Schieberegister kann bei Unterbrechung von bis zu 50% der Verbindungen noch zufriedenstellend arbeiten. Dies ist unabhängig von der Zahl der Schieberegisterausgänge, das heisst von der Grösse des Schieberegisters.

Das "neuronale" Schieberegister ist robuster gegenüber dem Ausfall von Verbindungen oder ganzen Schaltelementen als ein auf herkömmliche Weise vierfach redundant ausgelegtes System, das durch den Ausfall von je einem Bauelement in jedem der vier Teilsysteme funktionsunfähig wird.

Die Erfindung wird im folgenden anhand von in einer Zeichnung dargestellten Ausführungsbeispielen näher beschrieben, aus denen sich weitere Merkmale, Einzelheiten und Vorteile ergeben.

Es zeigen:

Figur 1a schematisch ein Schieberegister mit vierfacher Redundanz;
Figur 1b ein auf neuronalen Eigenschaften basierendes, fehlertolerantes Schieberegister im Schema;
Figur 2 eine sigmoide Eingangs/Ausgangs-Kennlinie; Figur 3 eine Streifenmusterfolge zur Erklärung der Arbeitsweise eines Schieberegisters;
Figur 4 ein Schaltbild eines fehlertoleranten Schieberegisters.

Eine Anordnung 1 besteht aus vier gleichartigen Schieberegistern 2, 3, 4, 5, deren Stufen in Fig. 1a als Kreise dargestellt sind. Die Schieberegister 2 bis 5 können eine beliebige Zahl von Ausgängen haben. Die Anordnung 1 hat eine vierfache Redundanz. Solange nur jeweils ein Schieberegister arbeitet, ist die Anordnung funktionsfähig.

Anstelle der Anordnung 1 wird ein nach neuronalen Prinzipien mit elektrischen beziehungsweise elektronischen Bauelementen arbeitendes Schieberegister 6 verwendet, das in Fig. 1b im Schema dargestellt ist. Es sind gemäss Fig. 1b nicht nur Verbindungen zwischen denjenigen Bauelementen vorhanden, die zu einer Reihenfolge zur Weiterschaltung des Schieberegisterinhalts angeordnet sind, sondern auch Verbindung zwischen Bauelementen, die dem gleichen Schieberegisterausgang zugeordnet sind. Das in Fig. 1b dargestellte neuronale Schieberegister enthält Kopplungen zwischen dne in Fig. 1a getrennten Teilsystemen, so dass das Gesamtsystem auch dann noch die gewünschte Funktion erfüllen kann, wenn Fehler in allen vier Teilsystemen auftreten. Anschaulich gesprochen heisst das, dass das System sich so selbst organisiert, dass es die intakten Teile der Einzelsysteme ausnutzt, um die Gesamtsystemfunktion zu erfüllen.

Die in Fig. 1b durch Kreise 7 dargestellten Bauelemente haben sigmoide-Kennlinien entsprechend Fig. 2, die das Ausgangssignal der Bauelemente in Abhängigkeit vom Eingangssignal zeigt. Aus dem Signalverlauf ergibt sich ein nichtlineares Verhalten.

Nach dem oben erwähnten Modell von Hopfield werden zur Mustererkennung sog. "formale Neuronen" verwendet, die auf einem Quadratgitter mit N Gitterplätzen beruhen. Die Aktivität eines formalen Neurons am Platz i ist genau zweier Werte fähig: $S_i = +1$ (aktiv), $S_i = -1$ (passiv, Ruhestellung). Die Synapsen zwischen zwei Neuronen an den Plätzen i und j werden durch die Kopplungen $J_{ij}$ beschrieben. Ist $J_{ij}$ positiv (negativ), so liegt eine erregende (hemmende) Kopplung vor.

Nach der Lernregel von D.O. HERB: "The Organization of Behaviour" (Wiley, New York, 1949) kodiert man die zu speichernden Informationen in den synaptischen Stärken $J_{ij}$. In der Sprache der Festkörperphysik handelt es sich um ein System von N Ising-Spins $S_i$ auf dem Quadratgitter, die untereinanderüber die Kopplungen $J_{ij}$ verbunden sind.

Ein Zustand des Systems wird durch einen N-dimensionalen Vektor $\underline{S} = (S_1, S_2, ..., S_N)$, $S_i = \pm 1$, $i = 1, 2, ..., N$ beschrieben. Die Dynamik des Systems wird folgendermassen eingerichtet. Man definiert das lokale (Magnet)-Feld oder "postsynaptische Potential" am Gitterplatz i :

$$h_i = \sum_{\substack{j=i \\ j \neq i}}^{N} J_{ij} \cdot S_j \qquad (1)$$

(i = 1, 2, ..., N).

Falls $h_i S_i < 0$, dreht man das Vorzeichen von $S_i$ um. Andernfalls bleibt es beim bisherigen Wert von $S_i$. (2)

In zyklischer Weise oder zufällig wählt man Gitterplätze i und führt diese Dynamik durch, bis es zu einem stabilen Zustand kommt. Die Regel (2) bedeutet, dass sich jeder Spin jeweils parallel zum lokalen von den übrigen Spins erzeugten Magnetfeld ausrichtet. Man kann zeigen, dass unter der Regel (2) die Energiefunktion

$$E = -\frac{1}{2} \sum_{\substack{i,j=1 \\ i \neq j}}^{N} S_i \cdot J_{ij} \cdot S_j \qquad (3)$$

nicht zunehmen kann. Die Spins bewegen sich also so lange, bis ein lokales Minimum der Energiefunktion (3) vorliegt. Man richtet die $J_{ij}$ nun in einer Lernphase so ein, dass die Energieminima gerade den zu speichernden Mustern entsprechen. Dazu kodiert man zum Beispiel ein Schwarz-Weiss-Muster aus N Punkten in Form eines N-dimensionalen Vektors $\xi = (\xi_1, \xi_2, ..., \xi_N)$ mit $\xi_i = \pm 1$, i = 1, 2, ..., N (+1 für weiss, -1 für schwarz oder umgekehrt). Wenn man dann auf einen gestörten Ausgangszustand $\underline{S} = (S_1, S_2, ..., S_N)$ die Dynamik (2) angewendet, bewegt sich das System in der "Energielandschaft" talwärts in das nächstgelegene Minimum.

Auf die beschriebene Weise rekonstruiert das neuronale Netz ein Muster, wenn der Ausgangszustand dem zu erkennenden Muster nur genügend ähnlich ist. Quantitativ heisst das, dass der Überlapp

$$m = \frac{1}{N} \sum_{i=1}^{N} \xi_i \cdot S_i \qquad (4)$$

zwischen dem zu erkennenden Muster $\xi$ und dem Ausgangszustand $\underline{S}$ grösser als 1/2 sein muss. Neben den Minima von (3), die gelernten Mustern entsprechend, bekommt man aber stets auch weitere Minima (Seitentäler), die zu sogenannten "falschen Zuständen" gehören und eine fehlerfreie Wiedererkennung bei zu geringem Überlapp (4) verhindern.

Die Speicherkapazität des Systems steigt somit mit der Zahl der lokalen Minima der Energiefunktion (3).

Die Lernregel nach HOPFIELD betrifft statische (unkorrelierte) Zufallsmuster. Eine entsprechende Regel für korrelierte, linear unabhängige Muster wurde von PERSONNAZ, GUYON und DREYFUSS (J. Physique Lett. 46, L 359 (195) entwickelt. "Linear unabhängig" heissen zwei Muster, deren zugeordnete N-dimensionale Vektoren linear unabhängig sind. Nach den genannten Autoren geht man dazu folgendermassen vor. Seien $_i$( ) (i = 1, 2, ..., N; = 1, 2, ..., q) die q zu lernenden Muster. Die Berechnung der synaptischen Stärken gestaltet sich besonders übersichtlich unter Verwendung der Korrelationsmatrix $\underline{C}$, die definiert ist zu:

$$C_{\mu\nu} := \frac{1}{N} \sum_{i=1}^{N} \xi_i^{(\mu)} \cdot \xi_i^{(\nu)} \qquad (5)$$

$\mu\ \nu$ = 1, 2, ..., q). Die synaptischen Stärken ergeben sich dann aus

$$J^{(1)}_{i,j} := \frac{1}{N} \sum^{q} \xi_i^{(\mu)} (C^{-1})_{\mu\nu} \cdot \xi_j^{(\nu)} \qquad (6)$$

(i, j = 1, 2, ..., N). Die Dynamik des Systems verläuft daraufhin wie oben nach der Vorschrift (2).

Bei der vorliegenden Erfindung wird die Arbeitsweise eines Schieberegisters als Speicherung und Erzeugung Mustersequenzen aufgefasst. In einem Schieberegister werden mittels eines vorgegebenen Takts Eingangssignale nacheinander an die verschiedenen Ausgänge des Schieberegisters weitergegeben. Diese Arbeitsweise des Schieberegisters wird in den in Fig. 1b schematisch dargestellten neuronalen Netz durch Mustersequenzen nachgebildet. Zur Speicherung und Erzeugung von Mustersequenzen ist nach Sompolinsky und Kanter (Phys. Rev. Lett. 57, 2861, (1986) und nach KLEINFELD (Proc. Natl. Acad. Sci. U.S.A. 83, 9469 (1986) sowie KÜHN, van HEMMEN und RIEDEL (in: L. PERSONNAZ und G. DREYFUSS (eds.): "Neural Networks from models to applications", Proc. n Euro. Conf. (I.D.S.E.T., Paris (1989), Seite 289)) der Ansatz 6 um einen Ausdruck zu erweitern, der den Übergang von einem Muster zum nächsten bewerkstelligt. Im folgenden soll eine zyklische Mustersequenz aus q Mustern erzeugt werden. Neben den Kopplungen $J_{ij}$ (6) führt man nach KÜHN et al. zusätzlich die synaptischen Stärken

$$J^{(2)}_{i,j} = \frac{1}{N} \sum_{\mu=1,\nu=1}^{q} \xi^{(\mu\oplus 1)} \cdot (C^{-1})_{\mu\cdot\nu} \cdot \xi_j^{(\nu)} \qquad (7)$$

(i, j = 1, 2, ..., N) ein, wobei $\mu \oplus 1 = (\mu + 1) \bmod(q)$. Man kann auch mehrere verschiedene Mustersequenzen speichern, wie KÜHN et al. zeigen. Für den hier vorgesehenen Zweck ist das aber nicht notwendig.

Im Falle von Mustersequenzen macht man für das lokale Feld zum Zeitpunkt t den Ansatz

$$h_i(t) := \sum_{\substack{j=1 \\ j\neq 1}}^{N} J^{(1)}_{ij} \cdot S_j(t) + \varepsilon \sum_{\substack{j=1 \\ j\neq i}} J^{(2)}_{ij} \cdot \bar{S}_j(t) \qquad (8)$$

mit

$$\bar{S}_j(t) := \int_0^{\infty} ds\, w(s) \cdot S_j(t-s) \qquad (9)$$

Der Ausdruck (9) ist ein "Verzögerungsbeitrag", der die Vergangenheit bis zum Zeitpunkt t berücksichtigt und mit einem normierten positiven Gewicht w versieht.

Für w(t) wählt man typischerweise die Deltafunktion w(t) = $\delta(t - \tau)$, die Rechteckfunktion

$$w(t) = \begin{cases} \frac{1}{\tau} & \text{für } 0 \leq t \leq \tau \\ 0 & \text{sonst} \end{cases} \qquad (10)$$

oder eine exponentielle Verzögerung $w(t) = \frac{1}{\tau}\exp(-\frac{t}{\tau})$, wobei eine charakteristische Verzögerungszeit ist. Die folgende Betrachtung geht von $w(t) = \delta(t - \tau)$ aus. Die Form der Funktion w hat nach KÜHN et al. allerdings keine grosse Bedeutung.

Für $\epsilon > 1$ macht das System nach einer Zeit von der Grössenordnung $\tau$ einen Übergang zum nächsten Muster.

Der "Simulation" der Arbeitsweise eines Schieberegisters durch ein neuronales Netz wird die in Fig. 3 dargestellte Streifenmusterfolge zugrunde gelegt. Das Schieberegister habe n Ausgänge.

Über die Muster werden ein Quadratgitter von r•p•n Neuronen gelegt. Das $\mu$ -te Muster entspricht dem Zustand, bei dem alle Neuronen im $\mu$ -ten Streifen aktiv sind und alle übrigen schweigen. Ein Streifen habe die Breite von p und die Länge von r Neuronen.

Die $\xi$ -Vektoren der n Muster aus der Mustersequenz des Schieberegisters lauten

$$\xi^{(\mu)}_{(i,j)} = 2\sum_{k=1}^{p} \delta_{j(\mu-1)p+k} - 1$$

($\mu$ = 1, 2, ..., n; i = 1, 2, ..., r; j = 1, 2, ..., p ` n). Dabei gibt $\mu$ den Streifen i die Zeile und j die Spalte des zugehörigen Neurons an.

Die Korrelationsmatrix berechnet man nach der Vorschrift (5). Man hat für $\mu,\nu$ = 1, 2, ..., n

$$C_{\mu\nu} = \frac{1}{np}\sum_{j=1}^{n\cdot p}\left(2\sum_{k_1=1}^{p} \delta_{j(\mu-1)p+k_1} - 1\right)\left(2\sum_{k_2=1}^{p} \delta_{j(\nu-1)\cdot p+k_2} - 1\right),$$

wofür man nach einfacher Rechnung folgendes Ergebnis bekommt:

$$C_{\mu\nu} = \frac{1}{n}\left\{n - 4 + 4\delta_{\mu\nu}\right\}$$

In die Korrelationsmatrix geben die Streifenbreite und -länge nicht ein.

über den Ansatz $(C^{-1})_{\mu\nu} = n\{a\,\delta_{\mu\nu} + b\}$, a, b, $\epsilon$ Q, lässt sich die Matrix (C) invertieren. Man gelangt zum Ausdruck

$$(C^{-1})_{\mu\nu} = \frac{n}{4}\left\{\delta_{\mu\nu} - \frac{n-4}{(n-2)^2}\right\}$$

$$(\mu,\nu = 1, 2 \ldots n)$$

Für die synaptische Stärke (6) ergibt sich durch Einsetzen der Mustervektoren und Verwendung des Resultats

$$J^{(1)}_{(i_1,j_1)(i_2,j_2)} = \frac{1}{4p\cdot r}\sum_{\mu,\nu=1}^{n}\left(2\cdot\sum_{k=1}^{p}\delta_{j_1,(\mu-1)p+k_1} - 1\right)\left(\delta_{\mu,\nu} - \frac{n-4}{(n-2)^2}\right)\cdot$$

$$\cdot\left(2\sum_{k_2=1}^{p}\delta_{k_2(\nu-1)p+k_2} - 1\right)$$

$$= \frac{1}{p\cdot r}\sum_{\mu=1}^{n}\sum_{k_1,k_2=1}^{p}\delta_{j_1,(\mu-1)\cdot p+k_1}\cdot\delta_{j_2,(\mu-1)\cdot p+k_2} \quad (12)$$

$$= \begin{cases} \frac{1}{p\cdot r} & \text{falls } j_1 \text{ und } j_2 \text{ zu demselben Streifen gehören} \\ 0 & \text{sonst} \end{cases}$$

($1 \leqq i_1, i_2 \leqq r$; $j_1, j_2 = 1, 2, \ldots$, jeweils mod(pn)), wobei (i, j) den Platz in der i-ten Zeile und j-ten Spalte des Quadratgitters und

$$\delta_{i,j} := \begin{cases} 1 & \text{für } i = j \\ 0 & \text{für } i \neq j \end{cases}$$

das KRONECKER-Symbol bezeichnen.

Bei der Rechnung hat man sehr sorgfältig auf die Definitionsbereiche der einzelnen Indizes zu achten. Die Kopplung (7) folgt aus dem obigen Ausdruck.

$$J_{(i_1,j_1)(i_2,j_2)} = \frac{1}{p \cdot r} \sum_{\mu=1} \sum_{k_1,k_2=1} \delta_{j_1,\mu p+k_2} \, \delta_{j_2,(\mu-1)\cdot p+k_2} \qquad (13)$$

$$= \begin{cases} \frac{1}{p \cdot r} & \text{falls } j_1 \text{ zu dem Streifen rechts neben demjenigen von } j_2 \text{ gehört} \\ 0 & \text{sonst} \end{cases}$$

mit denselben Bezeichnungen wie oben. Das so konstruierte neuronale Netz erzeugt unter der Dynamik nach der Regel (2) mit dem lokalen Feld (8) die Mustersequenz. Die Muster folgen zyklisch aufeinander mit einer Taktzeit der Grössenorndnung von $\tau$ aus der Beziehung (10). Die Streifen werden dabei als Ausgänge des Schieberegisters in dem Sinne aufgefasst, dass der k-te Ausgang ein Signale führt, sobald eines der Neuronen im k-ten Streifen aktiv ist.

Technisch ist das Verhalten durch ein ODER-Glied realisierbar. Dadurch und aufgrund der Tatsache, dass das neuronale Netz (nach einer Faustregel) die Mustersequenz zum Ausgang auch dann noch produziert, wenn bis zu 50% der synaptischen Verbindungen unterbrochen sind, hat das System eine grosse Fehlertoleranz beziehungsweise Redundanz. Dabei müssen auftretende Fehler nicht verbessert und damit auch nicht lokalisiert werden.

Die Ausdrücke (12) und (13) für die synaptischen Stärken zeigen, dass die Anordnung der Neuronen innerhalb eines jeden Streifens ohne Belang ist. Daher werden die Neuronen im folgenden stets übereinander angeordnet.

Die Funktion von Neuronen wird bei der vorliegenden Erfindung durch Operationsverstärker nachgebildet. Die Absolutbeträge der synaptischen Stärken "

$$J_{ij}^{(1)}$$

beziehungsweise

$$J_{ij}^{(2)}$$

", die oben berechnet wurden, werden durch die Kehrwerte von Widerständen, also durch Leitwerte realisiert, die zwischen Ein- und Ausgängen der die Neuronen darstellenden Operationsverstärker vorhanden sein müssen.

Im Falle negativer Werte für $J_{ij}$ ist das Signal zusätzlich zu invertieren. Dazu verwendet man insbesondere den "inversen" Ausgang des zugehörigen Operationsverstärkers.

Die nach den Beziehungen (10) notwendigen Verzögerungen können durch geeignete Schaltelemente realisiert werden. Wichtig ist die Tatsache, dass jeweils nur Neuronen im selben Streifen und in benachbarten Streifen miteinander verbunden sind.

Im allgemeinen Fall könnte jedes Neuron mit jedem anderen verbunden sein. Daher resultieren i. a. grosse topologische Probleme bei der Schaltungsrealisierung.

Die Fig. 4 zeigt zwei Stufen eines eine höhere Stufenzahl aufweisenden Schieberegisters. Neuronen sind durch vier Operationsverstärker 8 in der einen Stufe und vier Operationsverstärker 9 in der anderen Stufe dargestellt. Vor den Eingängen der Operationsverstärker 8, 9 sind jeweils Widerstände 23, 24, 25, 26 und jeweils in Reihe mit ihnen Verzögerungsbauelemente 27, 28, 29, 30 angeordnet, die mit einer ODER-Verknüpfung dem Eingang vorgeschaltet sind. Die ODER-Verknüpfung ist mit 14 bezeichnet. Die Ausgänge

der vier Operationsverstärker 8 speisen vier Leitungen 15, 16, 17, 18, an die jeweils Widerstände 23, 24, 25, 26 und in Reihe mit ihnen die Verzögerungsbauelemente 27 bis 30 der Operationsverstärker 9 angeschlossen sind. Die Widerstände 23 bis 26 und die Verzögerungsbauelemente 27 bis 30 sind mit je einer von vier nicht dargestellten Leitungen der vorangehenden Schieberegisterstufe verbunden. Die Operationsverstärker 9 speisen je eine Leitung 19, 20, 21, 22, an die nicht näher dargestellte Widerstände und Verzögerungsbauelemente vor den Eingängen der nächstfolgenden, nicht dargestellten Schieberegisterstufe angeschlossen sind. Die Leitungen 16 bis 18 sind je über einen Widerstand 10, 11, 12 mit dem in der Spalte (Streifen) ersten Operationsverstärker 8 verbunden. Alle Operationsverstärker 8 sind eingangsseitig über die Widerstände 10 bis 12 mit den Leitungen 15 bis 18 verbunden, die sie selbst nicht ausgangsseitig speisen. In gleicher Weise wie die Operationsverstärker 8 über Widerstände mit den Leitungen 15 bis 18 verbunden sind, sind die Operationsverstärker 9 über Widerstände mit den Leitungen 19 bis 22 verbunden.

Die Leitungen 15 bis 18 sind mit einem ODER-Glied 31 verbunden. Entsprechend sind die Leitungen 19 bis 25 mit einem ODER-Glied 32 verbunden. Die ODER-Glieder 31, 32 bilden zwei Ausgänge des Schieberegisters. Die Widerstandswerte der Widerstände 10 bis 12 und 23 bis 26 sind jeweils gleich. Die Verzögerungszeiten der Verzögerungsbauelemente 27 bis 30 sind ebenfalls gleich, wobei die Verzögerungszeit jeweils der Taktzeit des Schieberegisters entspricht. Die Versorgungsleitungen der Operationsverstärker 8, 9 sind der Übersichtlichkeit halber nicht dargestellt. Die Werte der Widerstände 10 bis 12 und 23 bis 26 ergeben sich aus den Leitwerten, das heisst den Absolutwerten der nach obiger Formel berechneten synaptischen Stärken unter Berücksichtigung des Faktors $\epsilon$ aus Formel (8). Die Informationen werden in die Eingänge der Operationsverstärker der ersten Spalte des Schieberegisters zugleich eingegeben. Das in Fig. 4 dargestellte "neuronale" Schieberegister ist robuster gegenüber dem Ausfall von Verbindungen oder ganzen Schaltelementen als ein auf herkömmliche Weise vierfach redundant ausgelegtes System, das durch den Ausfall von je einem Bauelement in jedem der vier Teilsysteme funktionsunfähig wird.

Wie oben bereits erwähnt, kann das neuronale Netz noch bei Unterbrechung von bis zu 50% der synaptischen Verbindungen zufriedenstellend arbeiten. Dies ergibt sich aus der folgenden Berechnung:

Das Schieberegister habe n Ausgänge und Q Neuronen pro Streifen. Die Gesamtzahl G der synaptischen Verbindungen ist gleich der Gesamtzahl der Eingänge an allen Neuronen. Pro Neuron hat man Q Eingänge von Nachbarstreifenneuronen und Q-1 Eingänge von Neuronen aus demselben Streifen. Folglich gilt $G = nQ(2Q-1)$.

Beim Ausfall eines ersten Neurons werden 2(2Q-1) synaptische Verbindungen unterbrochen. Beim Ausfall eines zweiten Neurons in einem benachbarten Streifen werden zusätzlich 2(2Q-1)-1 Verbindungen aufgebrochen. Der um eines erniedrigte Beitrag ergibt sich daraus, dass die Verbindung zum ersten defekten Neuron bereits im ersten Anteil 2(2Q-1) mitgezählt wurde. Für das dritte, vierte, ..., n-1-te ausfallende Neuron ergibt sich jeweils das gleiche Ergebnis.

Im Fall des zyklisch geschlossenen Systems bewirkt der Ausfall des n-ten Neurons schliesslich die Unterbrechung von 2(2Q-1)-2 Synapsen, weil die Verbindung zum ersten ausgefallenen Neuron schon berücksichtigt wurde. Beim Ausfall genau eines Neurons pro Streifen werden damit $g = n2(2Q-1)-(n-2)-2 = n(4Q-3)$ Synapsen zerstört. Damit 50% der Synapsen funktionstüchtig bleiben, muss folglich gelten

$$\frac{g}{G} < \frac{1}{2},$$

woraus man die Bedingung

$$Q^2 - \frac{9}{2} Q + 3 > 0$$

ableitet. Durch Berechnung der Nullstellen des Polynoms auf der linken Seite der obigen Ungleichung erhält man die Bedingung

$$Q < \frac{9}{2} - \frac{1}{4}\sqrt{33} = 0{,}8 \ldots \text{ oder } Q > \frac{9}{4} + \frac{1}{4}\sqrt{33} = 3{,}6 \ldots$$

Da Q positiv-ganzzahlig sein muss, hat man

$$Q \geqq 4,$$

wie behauptet.

Ein neuronales Schieberegister sollte mindestens vier Neuronen pro Streifen enthalten, um den Ausfall eines Neurons pro Streifen ausgleichen zu können. Dazu sei darauf hingewiesen, dass jedes Neuron über verschiedene Synapsen mit mehreren anderen Neuronen verbunden ist. Daher geht der Ausfall zum

Beispiel eines Viertels der Neuronen mit der Unterbrechung eines weitaus grösseren Anteils der Synapsen einher. Das hat man bei der Berechnung der zulässigen Anzahl ausfallender Neuronen zu berücksichtigen. Bemerkenswert ist die Unabhängigkeit des Ergebnisses von der Zahl der Schieberegisterausgänge, das heisst der Grösse des Schieberegisters.

Bei der Fig. 1a gezeigten herkömmlichen vierfachen Redundanz hat man das zu verwendende System einfach nur viermal nebeneinander aufgebaut.

Die Redundanz liegt darin, dass das Gesamtsystem funktioniert, solange nur mindestens eines der Teilsysteme funktionsfähig ist. Das entsprechende in Fig. 1b der Skizze dargestellte neuronale Bauelement enthält Kopplungen zwischen den nach Fig. 1a getrennten Teilsystemen, so dass das Gesamtsystem auch dann noch die gewünschte Funktion erfüllen kann, wenn Fehler in allen vier Teilsystemen auftreten. Anschaulich gesprochen heisst das, dass das System sich so selbst organisiert, dass es die intakten Teile der Einzelsysteme ausnutzt, um die Gesamtsystemfunktion zu erfüllen.

Die Fehlertoleranz des neuronalen Bauelements besteht dann darin, dass die auftretenden Fehler bis zu einem gewissen Mass nicht lokalisiert und damit auch nicht verbessert werden müssen, ohne dass dazu weitere Massnahmen (etwa bei der Herstellung der Bauelemente) oder nachträgliche Eingriffe erforderlich sind. Die Eigenschaft der Fehlertoleranz ist in dem Sinne systemimmanent. Im Falle des neuronalen Schieberegisters macht die obige Betrachtung zusätzlich deutlich, dass der erwähnte Vorteil gegenüber dem herkömmlich redundant aufgelegten System (siehe Fig. 1a) mit der Zahl der Ausgänge immer grösser wird.

## Patentansprüche

1. Fehlertolerantes Schieberegister mit einer bestimmten Anzahl (n) von Ausgängen,
   **dadurch gekennzeichnet,**
   dass eine von der Anzahl (n) der Ausgänge abhängige Zahl von elektrischen bzw. elektronischen Bauelementen, die sigmoide Eingangs/Ausgangskennlinien aufweisen, in Zeilen und Spalten in der Art eines Gitters angeordnet sind, das in Längsrichtung eine vorgebbare Zahl (r) von Bauelementen (8, 9) und in Breitenrichtung eine vorgebbare Zahl (n p) von Bauelementen (8, 9), also n aus je p Spalten bestehende Streifen von p r Stück Bauelementen (8, 9) aufweist, dass zwischen den Bauelementen in einem Streifen synaptische Kopplungen nach folgender Beziehung vorgesehen sind:

$$J^{(1)}_{(i_1,j)} = \frac{1}{pn}\sum_{\mu=1}^{n}\sum_{k_1,k_2=1}\delta_{j_1,(\mu-1)\cdot p+k_1}\,\delta_{j_2,(\mu-1)\cdot p+k_2} = \begin{cases}\frac{1}{p\cdot r} & \text{falls } j_1 \text{ und } j_2 \text{ zu demselben Streifen gehören,}\\ 0 & \text{sonst}\end{cases}$$

   und dass zwischen in verschiedenen Streifen angeordneten Bauelementen synaptische Kopplungen nach folgender Beziehung vorhanden sind:

$$J^{(2)}_{(i_1,j_1)} = \frac{1}{p\cdot r}\sum_{\mu=1}^{n}\sum_{k_1,k_2=1}^{p}\delta_{j_1,\mu\cdot p+k_1}\cdot\delta_{j_2,(\mu-1)\cdot p+k_2} = \begin{cases}\frac{1}{p\cdot r} & \text{falls } j_1 \text{ zu dem Streifen rechts neben demjenigen von } j_2 \text{ gehört}\\ 0 & \text{sonst}\end{cases}$$

   ($1 \leq i_1, i_2 \leq r$; $j_1, j_2 = 1, 2...$, jeweils mod (pn), wobei (i, j) den Platz in der i-ten Zeile und j-ten Spalte der Anordnung und

$$\delta_{i,j} := \begin{cases} 1 \text{ für } i = j \\ 0 \text{ für } i \neq j \end{cases}$$

das KRONECKER-Symbol bezeichnen.

2. Schieberegister nach Anspruch 1,
**dadurch gekennzeichnet,**
dass die Bauelemente (8, 9) Operationsverstärker sind.

3. Schieberegister nach Anspruch 1 oder 2,
**dadurch gekennzeichnet,**
dass die Absolutwerte der synaptischen Kopplungen Leitwerte sind, die Widerständen vor den Eingängen der Operationsverstärker zugeordnet sind.

4. Schieberegister nach einem oder mehreren der vorhergehenden Ansprüche,
**dadurch gekennzeichnet,**
dass die Widerstände vor den Eingängen der Operationsverstärker in ODER-Verknüpfung zueinander stehen.

5. Schieberegister nach einem oder mehreren der vorhergehenden Ansprüche,
**dadurch gekennzeichnet,**
dass negative synaptische Kopplungen durch Verbindung der entsprechenden Widerstände mit inversen Ausgängen der Operationsverstärker gebildet werden.

6. Schieberegister nach einem oder mehreren der vorhergehenden Ansprüche,
**dadurch gekennzeichnet,**
dass jeder in einem Streifen angeordnete Operationsverstärker (9) eingangsseitig über Widerstände (23, 24, 25, 26) in Reihe mit Verzögerungsbauelementen (27, 28, 29, 30) mit allen Ausgängen aller Operationsverstärker (8) des in der Reihenfolge der Ausgänge des Schieberegisters vorhergehenden Streifens verbunden ist und dass in der gleichen Spalte jeder Operationsverstärker (8) eingangsseitig mit den Ausgängen aller übrigen Operationsverstärker des gleichen Streifens über Widerstände (10, 11, 12) verbunden ist.

7. Schieberegister nach einem oder mehreren der vorhergehenden Ansprüche,
**dadurch gekennzeichnet,**
dass die Ausgänge aller Operationsverstärker (8, 9) des gleichen Streifens an ein ODER-Glied (31, 32) gelegt sind.

8. Schieberegister nach einem oder mehreren der vorhergehenden Ansprüche,
**dadurch gekennzeichnet,**
dass Operationsverstärker (8, 9) in mindestens vier Zeilen angeordnet sind.

9. Schieberegister nach einem oder mehreren der vorhergehenden Ansprüche,
**dadurch gekennzeichnet,**
dass Operationsverstärker (8, 9) in Streifen aus je einer Spalte angeordnet sind.

FIG.1a

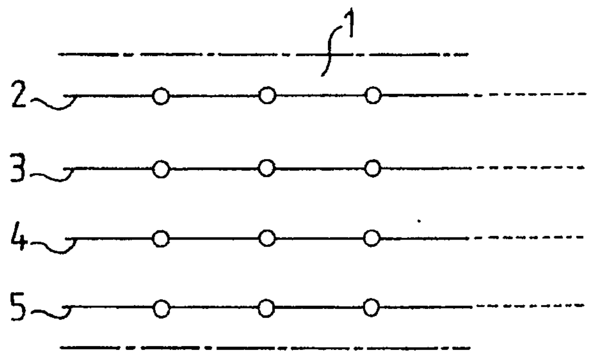


FIG.1b

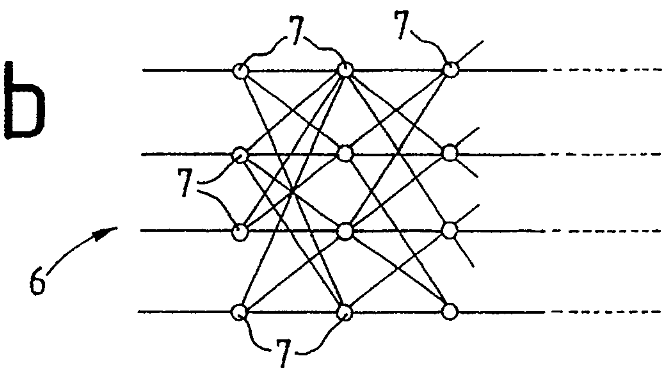


FIG.2

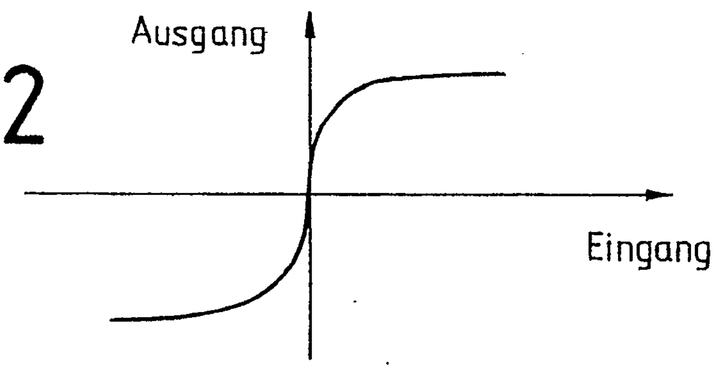


FIG.3

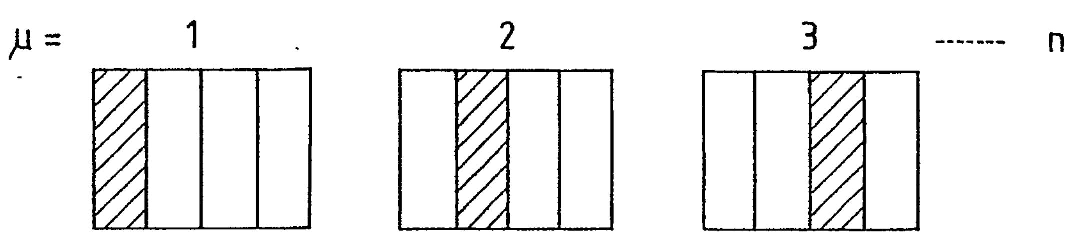

FIG.4

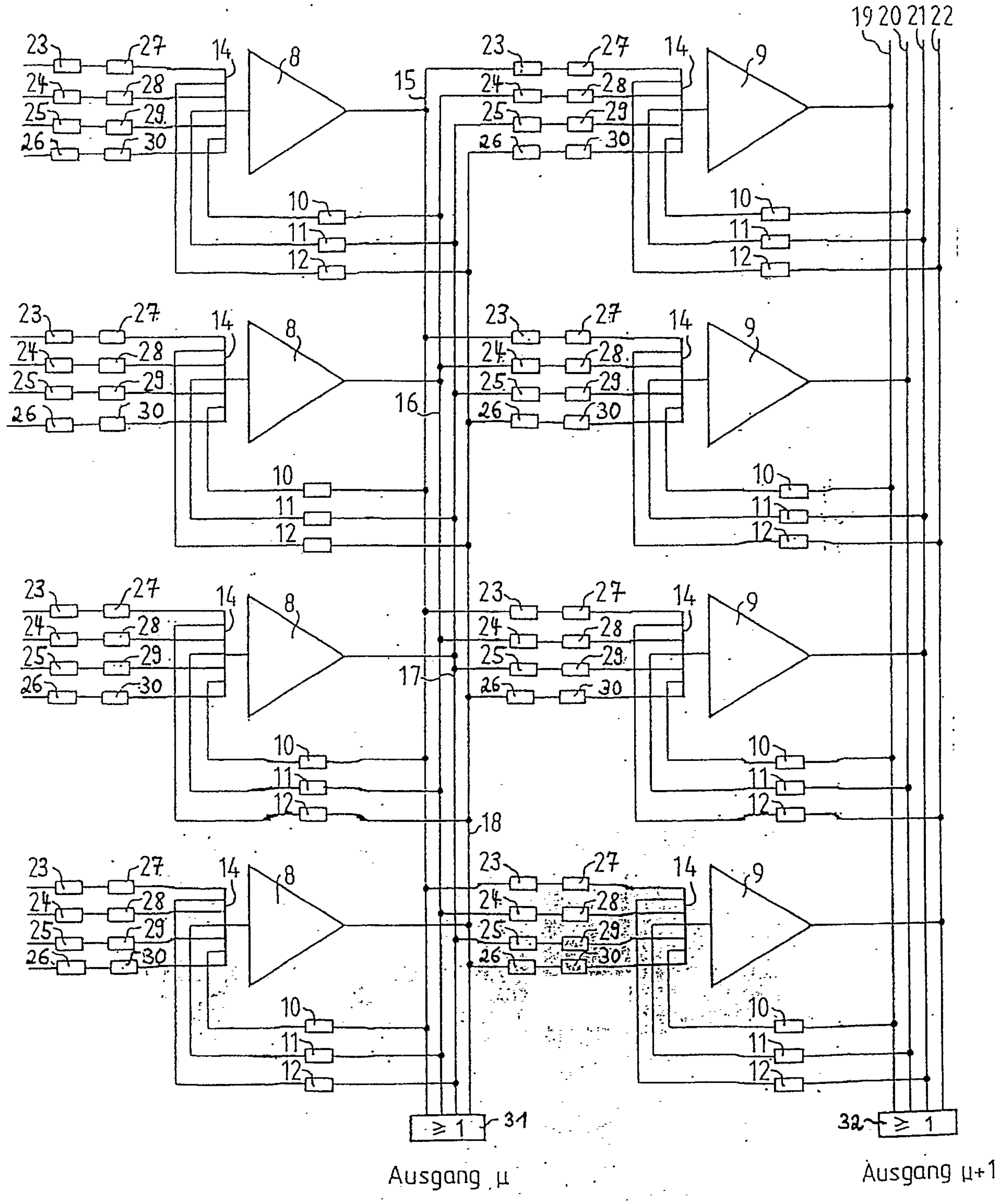
19 20 21 22
23
24
25
26
27
28
29
30
14
8
9
15
16
17
18
10
11
12
≥ 1
31
32
Ausgang μ
Ausgang μ+1